# EUROPÄISCHE PATENTSCHRIFT

(11) **EP 3 629 112 B1**
(45) Veröffentlichungstag und Bekanntmachung des Hinweises auf die Patenterteilung: **20.04.2022**
(21) Anmeldenummer: 19450009.6
(22) Anmeldetag: 26.09.2019
(51) Int. Cl.: G05B 19/042, G05B 19/05, G06F 8/34

(54) **VERFAHREN ZUR ANZEIGE VON DISKREPANZEN ZWISCHEN EINEM ANWENDERPROGRAMM FÜR EINE SPEICHERPROGRAMMIERBARE STEUERUNG UND DESSEN KOPIE**
METHOD FOR DISPLAYING DISCREPANCIES BETWEEN A USER PROGRAM FOR A PROGRAMMABLE CONTROLLER AND ITS COPY
PROCÉDÉ D'AFFICHAGE DES ÉCARTS ENTRE UN PROGRAMME UTILISATEUR POUR UNE COMMANDE À MÉMOIRE PROGRAMMABLE ET SA COPIE

(30) Priorität: 28.09.2018 AT 3002018
(43) Veröffentlichungstag der Anmeldung: 01.04.2020
(73) Patentinhaber: logi.cals GmbH, 3100 St. Pölten (AT)
(72) Erfinder: Steininger, Heinrich, 1090 Wien (AT)
(74) Vertreter: Keschmann, Marc

(56) Entgegenhaltungen:
- EP-A1- 2 455 855
- DE-A1- 10 051 645
- US-A1- 2006 190 105
- US-A1- 2016 306 337
- US-B1- 7 143 366

## Beschreibung

Die Erfindung betrifft ein Verfahren zur Anzeige von Diskrepanzen zwischen einem Anwenderprogramm für eine speicherprogrammierbare Steuerung und dessen Kopie, wobei das Anwenderprogramm für die Bearbeitung mittels eines Editors auf einem Arbeitsplatzrechner gespeichert ist und die Programmkopie in einem Speicher der speicherprogrammierbaren Steuerung gespeichert ist, wobei unter Anwendung eines Darstellungsmodells eine graphische Darstellung des Anwenderprogramms erstellt wird.

Das Dokument EP 2 455 855 A1 zeigt und beschreibt Verfahren zur Anzeige von Diskrepanzen zwischen einem Anwenderprogramm für eine speicherprogrammierbare Steuerung und dessen Kopie, ein entsprechendes Computerprogrammprodukt sowie eine Recheneinrichtung gemäß dem Stand der Technik und bildet somit den technischen Hintergrund der vorliegenden Erfindung.

Speicherprogrammierbare Steuerungen (SPS) werden in zahlreichen technischen Bereichen zur Steuerung oder Regelung von Maschinen und Anlagen eingesetzt und werden auf digitaler Basis programmiert. Speicherprogrammierbare Steuerungen weisen als notwendige Bestandteile Eingänge, Ausgänge, ein Laufzeitsystem und eine Schnittstelle auf, über die das Anwenderprogramm geladen werden kann. Das Anwenderprogramm legt fest, wie die Ausgänge in Abhängigkeit von den Eingängen geschaltet werden sollen.

Die Programmierung erfolgt in der Regel mit Hilfe eines Programmiergeräts, welches zum Beispiel als Softwareanwendung ("Editor") auf einem Arbeitsplatzrechner unter Microsoft Windows oder Linux ausgebildet sein kann. Alternativ kann die Programmierung auch mit Hilfe eines Web Editors erfolgen, d.h. in einem Browser auf einem Arbeitsplatzrechner ("Host"). Der Arbeitsplatzrechner kann als herkömmlicher Personal Computer (PC) oder als Tablet oder dgl. ausgebildet sein. Das im Editor erstellte Anwenderprogramm ist hierbei lokal gespeichert und wird beim Programmieren auf die speicherprogrammierbare Steuerung geladen bzw. kopiert. Sie bleibt dort solange im Speicher, bis sie vom Benutzer gelöscht oder überschrieben wird.

Die Programmierung und Bearbeitung des Anwenderprogramms mit Hilfe des Editors erfolgt in der Regel unter Verwendung einer Programmiersprache, wie z.B. einer der in der Norm EN 61131-3 genannten Programmiersprachen. Weit verbreitet ist hierbei die sog. Funktionsbausteinsprache, bei der es sich um eine grafisch orientierte Programmiersprache handelt, welche in ihrer Darstellung u.a. die Logiksymbole der Booleschen Algebra verwendet und bei welcher das Anwenderprogramm als Funktionsplan auf dem Bildschirm des Arbeitsplatzrechners graphisch dargestellt wird. Die durch die Programmiersprache, insbesondere Funktionsbausteinsprache, vorgenommene Übersetzung des Anwenderprogramms in eine graphische Darstellung erfolgt hierbei auf Grund eines Sets von vorgegebenen Zeichenanweisungen, welches im Rahmen der Erfindung auch als "Darstellungsmodell" bezeichnet wird.

Bei der Programmierung und dem Betrieb von speicherprogrammierbaren Steuerungen ist die Absicherung gegen Fehlfunktionen sowie die Gewährleistung der Manipulationssicherheit essentiell. Dabei kann bei den einzelnen Komponenten, nämlich dem Editor, der Steuerung selbst sowie der dazwischenliegenden datenkommunikationstechnischen Verbindung, von den folgenden Rahmenbedingungen ausgegangen werden. Der Editor, wie z.B. ein Web-Editor hat eine hard- und softwaretechnische Umgebung, die per definitionem unsicher ist, d.h. es muss davon ausgegangen werden, dass unerkannte Fehler auftreten. Die speicherprogrammierbare Steuerung ist als sichere Hardware nach IEC 61508-2, Annex D ("Target") zu betrachten und enthält sichere Softwarekomponenten, wie z.B. die Safety-Shell (Back End für Web-Editor). Die datenkommunikationstechnische Verbindung zwischen dem Editor bzw. dem Arbeitsplatzrechner, auf dem der Editor läuft, und der speicherprogrammierbaren Steuerung erfolgt in der Regel über eine herkömmliche elektronische Verbindung, wie z.B. über das Internet (z.B. TCP/IP) und ist daher als unsicher zu bezeichnen.

Bei der Erstellung funktional sicherer Anwenderprogramme für speicherprogrammierbare Steuerungen muss der Anwender in die Lage versetzt werden, mögliche, zufällig auftretende Verfälschungen zu erkennen, die dazu führen würden, dass die Steuerung ein Anwenderprogramm verarbeitet, das von demjenigen, das der Anwender in seinem Editor sieht, abweicht. Solche Verfälschungen können bei der Übertragung vom Arbeitsplatzrechner zur Steuerung auftreten, die jedoch im Allgemeinen prüfsummengesichert ist, jedoch auch durch zufällige Fehler im (nicht sicheren) Arbeitsplatzrechner selbst, die üblicherweise nicht erkannt werden. Auch für am Arbeitsplatzrechner eingesetzte Softwarekomponenten (z.B. Web-Browser), die nicht sicherheitsgerichtet entwickelt wurden, müssen spezielle Absicherungsmaßnahmen umgesetzt werden, um systematische Fehler dieser Komponenten beherrschbar zu machen.

Aus dem Stand der Technik sind im Wesentlichen zwei Verfahren bekannt, mit welchen die genannten Probleme beherrschbar gemacht werden können.

Wenn das Anwenderprogramm mit Hilfe einer Funktionsbausteinsprache erstellt bzw. bearbeitet wird, sodass das Anwenderprogramm als Funktionsplan auf dem Bildschirm des Arbeitsplatzrechners graphisch dargestellt wird, kann eine gewisse Sicherheit dadurch erreicht werden, dass diversitäre Darstellungen des Anwenderprogramms verwendet werden. Zusätzlich zur Darstellung als Funktionsplan wird dem Anwender das erstellte Anwenderprogramm auch in einer anderen Form - beispielsweise textuell als Folge von Kommandozeilen - angezeigt. Der Anwender muss damit eine Zuordnung zwischen dem Funktionsplan und der diversitären Darstellung vornehmen und diese auf Abweichungen überprüfen. Diese Vorgehensweise ist jedoch mühsam und fehleranfällig und wird daher von den Anwendern oft nicht mit der erforderlichen Sorgfalt vorgenommen.

Eine weitere im Stand der Technik bekannte Möglichkeit liegt in der Umsetzung eines separaten Verifikationsschrittes. Nach der Erstellung des Anwenderprogramms muss der Anwender die Applikation erneut anzeigen lassen oder beispielsweise ausdrucken und überprüfen, ob sie seinen Erwartungen entspricht. Auch dies ist mühsam, wobei auch Common-Cause Fehler ausgeschlossen werden müssen.

Die vorliegende Erfindung zielt daher darauf ab, ein beim Programmieren einer speicherprogrammierbaren Steuerung einzusetzendes Verfahren anzugeben, mit welchem der Anwender in die Lage versetzt werden soll, gesichert zu erkennen, dass das in der speicherprogrammierbaren Steuerung gespeicherte Anwenderprogramm dem entspricht, das er auf dem Editor des Arbeitsplatzrechners zu erstellen versucht hat und auf seinem Bildschirm angezeigt wird. Ein im Arbeitsplatzrechner oder in der Verbindung auftretender Einfachfehler soll daher für den Anwender unmittelbar und einfach zu erkennen sein.

Zur Lösung dieser Aufgabe sieht die Erfindung ein Verfahren zur Anzeige von Diskrepanzen zwischen einem Anwenderprogramm für eine speicherprogrammierbare Steuerung und dessen Kopie vor, wobei das Anwenderprogramm für die Bearbeitung mittels eines Editors auf einem Arbeitsplatzrechner gespeichert ist und die Programmkopie in einem Speicher der speicherprogrammierbaren Steuerung gespeichert ist, wobei unter Anwendung eines Darstellungsmodells eine graphische Darstellung des Anwenderprogramms erstellt wird, wobei das Verfahren dadurch gekennzeichnet ist, dass unter Anwendung des Darstellungsmodells auch eine graphische Darstellung der Programmkopie erstellt wird, wobei die graphische Darstellung des Programms und die graphische Darstellung der Programmkopie einem Verschmelzungsalgorithmus unterworfen werden, der eine zusammengeführte graphische Darstellung erzeugt, welche einer dem Arbeitsplatzrechner zugeordneten Anzeigevorrichtung zu ihrer Anzeige zugeführt wird und welche etwaige Diskrepanzen zwischen der graphischen Darstellung des Anwenderprogramms und der graphischen Darstellung der Programmkopie in der graphischen Darstellung ersichtlich macht.

Die Erfindung beruht somit auf dem Vergleich zweier diversitär erzeugter graphischer Darstellungen des Anwenderprogramms sowie der Programmkopie. Insbesondere werden die zwei graphischen Darstellungen unabhängig voneinander, jedoch unter Verwendung desselben Darstellungsmodells erzeugt. Es wird einerseits eine graphische Darstellung des im Arbeitsplatzrechners gespeicherten Anwenderprogramms erzeugt, wobei es sich ggf. um das Anwenderprogramm handelt, das der Anwender bearbeitet und das dem Anwender daher am Bildschirm angezeigt wird. Andererseits wird eine graphische Darstellung des in der speicherprogrammierbaren Steuerung gespeicherten Anwenderprogramms erzeugt, bei dem es sich um die Programmkopie des im Arbeitsplatzrechner gespeicherten Anwenderprogramms handelt. Abweichungen der graphischen Darstellungen voneinander sind hierbei auf eine Divergenz zwischen dem Anwenderprogramm und der Programmkopie zurückzuführen. Um dem Anwender die Diskrepanz unmittelbar vor Augen zu führen, ist vorgesehen, dass die beiden graphischen Darstellungen einem Verschmelzungsalgorithmus unterworfen werden, der eine zusammengeführte graphische Darstellung erzeugt. Die zusammengeführte graphische Darstellung wird einer dem Arbeitsplatzrechner zugeordneten Anzeigevorrichtung zugeführt, welche diese anzeigt, wobei der Verschmelzungsalgorithmus die graphische Darstellung im Falle einer Diskrepanz so verändert, dass die Diskrepanz darin ersichtlich gemacht wird.

Für die Durchführung des Verfahrens reicht es aus, wenn nur die zusammengeführte graphische Darstellung dem Benutzer angezeigt wird, d.h. einer dem Arbeitsplatzrechner zugeordneten Anzeigevorrichtung zugeführt wird, welche die graphische Darstellung anzeigt. Die graphische Darstellung des Anwenderprogramms und die der Programmkopie müssen hierbei nicht angezeigt werden bzw. werden bevorzugt nicht angezeigt. Das Merkmal, wonach eine graphische Darstellung des Anwenderprogramms erstellt wird, bedeutet im Rahmen der Erfindung somit nicht notwendigerweise, dass die jeweilige graphische Darstellung tatsächlich auf einer Anzeigevorrichtung sichtbar gemacht wird. Es ist vielmehr ausreichend, wenn die die Anzeige der graphischen Darstellung ermöglichenden Daten generiert werden.

Gemäß einer bevorzugten Verfahrensweise wird die graphische Darstellung des Anwenderprogramms und der Programmkopie als Pixelgrafik bzw. als die Pixelgrafik repräsentierende Daten erzeugt. Dies ermöglicht einen Vergleich der graphischen Darstellung des Anwenderprogramms und der Programmkopie Pixel pro Pixel. Unter einer Pixelgrafik versteht man eine Form der Beschreibung eines Bildes in Form von computerlesbaren Daten. Pixelgrafiken bestehen aus einer rasterförmigen Anordnung von Pixeln, denen jeweils eine Farbe zugeordnet ist.

Wie an sich bereits bekannt, wird die graphische Darstellung des Anwenderprogramms und der Programmkopie vorzugsweise als Funktionsplan erzeugt. Die Umsetzung des Programms in die graphische Darstellung erfolgt somit unter Verwendung einer graphischen Programmiersprache, insbesondere der sog. Funktionsbausteinsprache gemäß EN 61131-3.

Der Verschmelzungsalgorithmus ist vorzugsweise derart ausgebildet, dass die zusammengeführte graphische Darstellung in Bereichen ohne Diskrepanzen der graphischen Darstellung des Anwenderprogramms entspricht. Die zusammengeführte graphische Darstellung kann vom Anwender während des Programmierens daher wie die herkömmliche graphische Darstellung benutzt werden, da sich diese von der herkömmlichen graphischen Darstellung nicht unterscheidet, solange keine Diskrepanzen zwischen dem im Editor bearbeiteten Anwenderprogramm und der in der Steuerung vorliegenden Kopie erkannt werden. Lediglich im Falle einer Diskrepanz wird die graphische Darstellung, insbesondere der Funktionsplan, an der abweichenden Stelle, entsprechend gekennzeichnet.

Gemäß einer bevorzugten Ausführung der Erfindung ist der Verschmelzungsalgorithmus ausgebildet, um etwaige Diskrepanzen pixelweise festzustellen und in der zusammengeführten graphischen Darstellung sichtbar zu machen. Der pixelweise Abgleich der beiden graphischen Darstellungen bedeutet, dass jedes Pixel der einen graphischen Darstellung mit dem jeweils korrespondierenden Pixel der anderen graphischen Darstellung verglichen wird, wobei ein korrespondierendes Pixel jenes ist, das an derselben Stelle im Pixelraster angeordnet ist wie das Pixel in der Vergleichsdarstellung. Der pixelweise Abgleich der graphischen Darstellungen ermöglicht es, lediglich diejenigen Pixel der zusammengeführten graphischen Darstellung zu kennzeichnen, bei denen eine Diskrepanz festgestellt wurde.

Der Verschmelzungsalgorithmus kann grundsätzlich beliebig ausgebildet sein, solange er in der Lage ist, eine Diskrepanz zwischen den beiden graphischen Darstellungen, insbesondere zwischen den korrespondierenden Pixeln der Darstellungen festzustellen. Dem Vergleich zwischen den beiden graphischen Darstellungen wird im Falle eines pixelweisen Vorgehens bevorzugt wenigstens ein Farbparameter des jeweiligen Pixels zugrunde gelegt. Eine Diskrepanz wird hierbei dann festgestellt, wenn der wenigstens eine Farbparameter des Pixels der einen graphischen Darstellung von dem korrespondierenden Pixel der anderen graphischen Darstellung abweicht. Als Farbparameter kann z.B. wenigstens eine Koordinate eines Farbvektors in einem Farbraum, z.B. im RGB-Farbraum herangezogen werden.

Der Verschmelzungsalgorithmus verarbeitet hierbei zwei als Pixelgrafiken vorliegende Darstellungen (A und B). Im ersten Schritt wird für jedes Pixel der RGB-Farbvektor durch eine Addition der Farbvektoren A und B der beiden Ausgangspixel erzeugt, wobei die Ausgangsvektoren zuvor unterschiedlich gestaucht werden. Die Stauchung in Rot- und Grün-Richtung unterscheidet sich dabei vorzugsweise von der in Blau-Richtung, um auch im Fall einer Rot-Grün-Sehschwäche eine Unterscheidbarkeit sicher zu stellen. Für den Fall, dass die Farbvektoren A und B ident waren, ist auch das Ergebnis, d.h. die zusammengeführte graphische Darstellung, gleich. Andernfalls unterscheidet sich das Ergebnis, wobei sich unterschiedliche Farben ergeben, je nachdem ob A oder B vom Hintergrund abweicht.

Um die Sichtbarkeit zusätzlich zu erhöhen, können abhängig von der Pixelposition die Farbvektoren in unterschiedlichen Farb-Richtungen binär invertiert werden, falls ein Pixel vom Hintergrund abweicht. Dies erfolgt für beide Ausgangspixel und damit entsteht bei Abweichungen ein den Kontrast erhöhendes Muster, wie z.B. eine Schraffur. Falls die beiden Farbevektoren ident waren, gleichen sich diese Operationen erneut aus. Dies unabhängig davon, ob beide Vektoren vom Hintergrund abweichen oder nicht. Der Algorithmus leistet den erwarteten Effekt sowohl für schwarze als auch für beliebige farbige Ausgangs-Pixel.

Was die Erzeugung der graphischen Darstellung der Programmkopie betrifft, kann dies grundsätzlich entweder in der speicherprogrammierbaren Steuerung erfolgen oder in dem Arbeitsplatzrechner. Wenn die Erzeugung der graphischen Darstellung in der speicherprogrammierbaren Steuerung erfolgt, muss die graphische Darstellung der Programmkopie in der Form von Grafikdaten an den Arbeitsplatzrechner übermittelt werden, damit etwaige Diskrepanzen zu der graphischen Darstellung des Anwenderprogramms dort festgestellt werden können.

Wenn die Erzeugung der graphischen Darstellung der Programmkopie nicht in der speicherprogrammierbaren Steuerung erfolgt, so ist bevorzugt vorgesehen, dass zumindest das zur graphischen Darstellung der Programmkopie verwendete Darstellungsmodell in einem Speicher der speicherprogrammierbaren Steuerung gespeichert ist. In diesem Fall erfolgt die Erzeugung des graphischen Darstellung der Programmkopie bevorzugt derart, dass das zur graphischen Darstellung der Programmkopie verwendete Darstellungsmodell zur Erzeugung von Zeichenanweisungen aus der Programmkopie verwendet wird und die Zeichenanweisungen von der speicherprogrammierbaren Steuerung an den Arbeitsplatzrechner übermittelt werden und die Erstellung der graphischen Darstellung der Programmkopie unter Verwendung der Zeichenanweisungen durch den Arbeitsplatzrechner erfolgt.

Bevorzugt ist vorgesehen, dass die Erzeugung der zusammengeführten graphischen Darstellung mit Hilfe des Verschmelzungsalgorithmus durch den Arbeitsplatzrechner erfolgt.

Was den Vorgang des Kopierens des im Arbeitsplatzrechner gespeicherten Anwenderprogramms auf die speicherprogrammierbare Steuerung betrifft, sind verschiedene Vorgehensweisen möglich, die darauf abzielen, dass die speicherprogrammierbare Steuerung stets über dieselbe Version des Anwenderprogramms verfügt wie der Arbeitsplatzrechner.

Bevorzugt kann so vorgegangen werden, dass das Erstellen der Programmkopie das Kopieren des Anwenderprogramms über eine zwischen dem Arbeitsplatzrechner und der speicherprogrammierbaren Steuerung angeordnete Datentelekommunikationsverbindung umfasst. Hierbei wird somit in einem einzigen Kopier- bzw. Übertragungsschritt das gesamte Anwenderprogramm an die speicherprogrammierbare Steuerung übermittelt.

Alternativ oder ergänzend kann vorgesehen sein, dass das Erstellen der Programmkopie das Übermitteln von mit Hilfe des Editors vorgenommenen inkrementellen Änderungen des Anwenderprogramms über eine Datentelekommunikationsverbindung zwischen dem Arbeitsplatzrechner und der speicherprogrammierbaren Steuerung und das entsprechende Aktualisieren der Programmkopie umfasst. Diese Vorgehensweise ist insbesondere für das Aktualisieren einer bereits zuvor an die Steuerung übermittelten Programmkopie vorteilhaft.

In diesem Zusammenhang ist es bevorzugt, dass die Aktualisierung nach jeder Änderung, die vom Anwender bestätigt wird, erfolgt. Das Verfahren ist hierbei bevorzugt derart weitergebildet, dass nach Änderungen des Anwenderprogramms, insbesondere nach jeder Änderung des Anwenderprogramms, mit Hilfe des Editors die graphische Darstellung des Anwenderprogramms erstellt bzw. aktualisiert wird und dass nach Aktualisierungen der Programmkopie, insbesondere nach jeder Aktualisierung der Programmkopie, die graphische Darstellung der Programmkopie erstellt bzw. aktualisiert wird. Insbesondere wird hierbei so verfahren, dass nach jeder Änderung eine etwaige Diskrepanz zwischen dem in dem Arbeitsplatzrechner gespeicherten Anwenderprogramm und der in der Steuerung vorhandenen Programmkopie nach dem erfindungsgemäßen Verfahren ermittelt wird, sodass dem Anwender nach jedem Änderungsschritt angezeigt wird, ob eine Diskrepanz vorhanden ist oder nicht.

Der Editier- und nachfolgende Prüfvorgang kann dabei wie folgt ablaufen: Durch Tastatur oder Maus editiert der Anwender das Anwenderprogramm im Editor des Arbeitsplatzrechners, beispielsweise indem er einen Funktionsblock hinzufügt. Der Editor sendet ein Änderungskommando an das lokal gespeicherte Anwenderprogramm, wodurch eine entsprechende Änderung der dem Anwender am Bildschirm angezeigten graphischen Darstellung des Anwenderprogramms erfolgt. Der Editor sendet hierauf ein Änderungskommando über eine Datentelekommunikationsverbindung, wie z.B. über das Internet, an einen in der speicherprogrammierbaren Steuerung befindlichen Model Manager, d.h. eine Software-Komponente, die vom Arbeitsplatzrechner erhaltene Änderungskommandos verarbeiten und entsprechend die Programmkopie modifizieren kann. Der Model Manager leitet das Kommando an die in der Steuerung gespeicherte Programmkopie weiter und dieses antwortet (wieder über die Datentelekommunikationsverbindung) mit einer Änderung der grafischen Darstellung der Programmkopie. In dem Arbeitsplatzrechner integriert ein Verschmelzungsalgorithmus die beiden diversitär erzeugten grafischen Darstellungen und erzeugt am Bildschirm ein kombiniertes Bild, in dem allfällige Abweichungen zwischen dem im Arbeitsplatzrechner gespeicherten Anwenderprogramm und der in der speicherprogrammierbaren Steuerung gespeicherten Programmkopie erkennbar sind.

Die Erfindung betrifft weiters ein Computerprogrammprodukt umfassend Programmcode-Mittel geeignet zur Durchführung der Schritte des erfindungsgemäßen Verfahrens, wenn das Computerprogrammprodukt auf dem Arbeitsplatzrechner ausgeführt wird.

Insbesondere betrifft die Erfindung hierbei ein Computerprogrammprodukt, welches Softwarecodeabschnitte aufweist, welche in einem erfindungsgemäßen Verfahren geeignet sind, um die am Arbeitsplatzrechner durchzuführenden Schritte vorzunehmen, nämlich um unter Anwendung eines Darstellungsmodells eine graphische Darstellung des Anwenderprogramms für die speicherprogrammierbare Steuerung zu erstellen, unter Anwendung des Darstellungsmodells eine graphische Darstellung der Programmkopie zu erstellen oder eine solche von der speicherprogrammierbaren Steuerung zu erhalten und die graphische Darstellung des Anwenderprogramms und die graphische Darstellung der Programmkopie einem Verschmelzungsalgorithmus zu unterwerfen, der eine zusammengeführte graphische Darstellung erzeugt, welche einer dem Arbeitsplatzrechner zugeordneten Anzeigevorrichtung zu ihrer Anzeige zugeführt wird und welche etwaige Diskrepanzen zwischen der graphischen Darstellung des Anwenderprogramms und der graphischen Darstellung der Programmkopie in der graphischen Darstellung ersichtlich macht.

Schließlich betrifft die Erfindung eine Recheneinrichtung zur Durchführung des erfindungsgemäßen Verfahrens, welches dadurch gekennzeichnet ist, dass der Arbeitsplatzrechner mit einem zuvor erwähnten Computerprogrammprodukt programmiert ist.

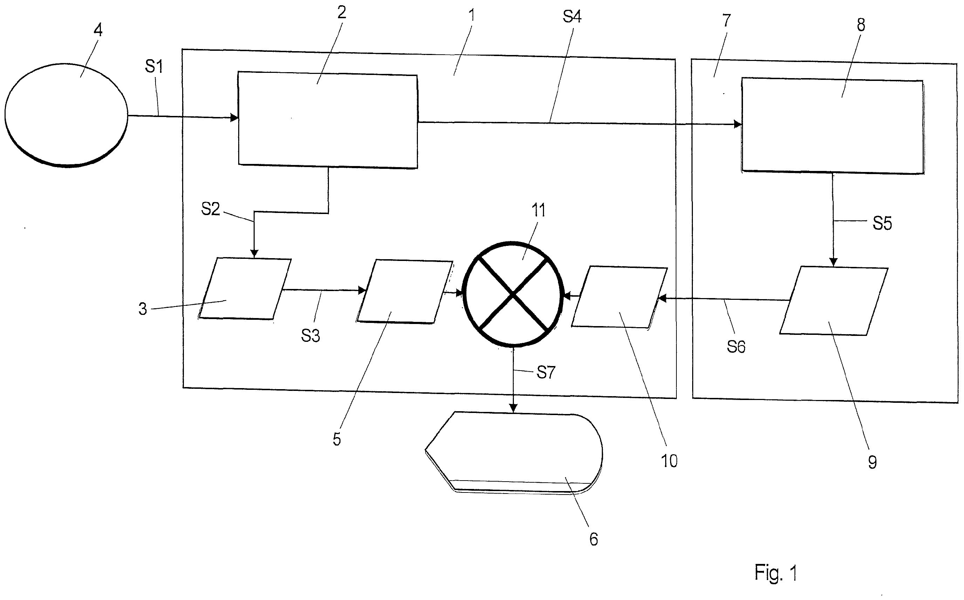

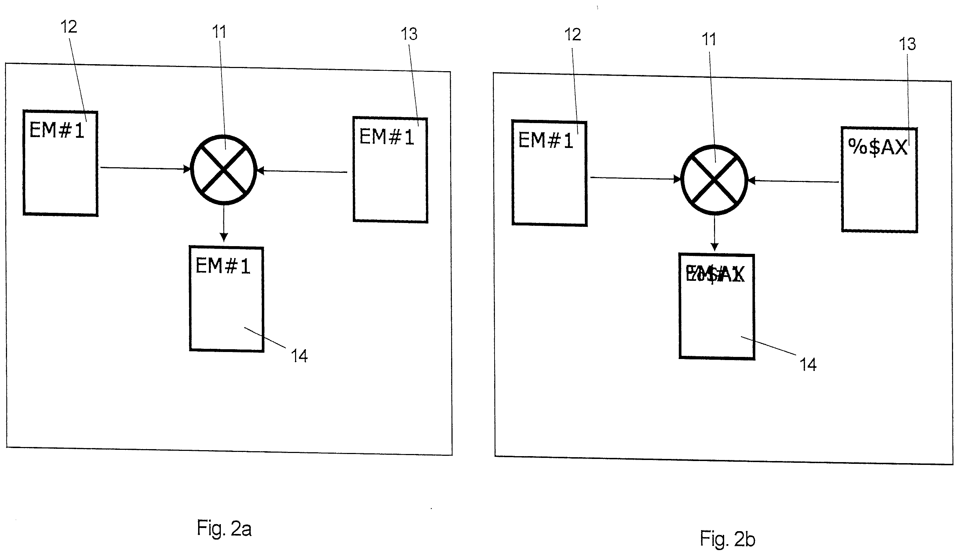

Die Erfindung wird nachfolgend anhand eines in der Zeichnung schematisch dargestellten Ausführungsbeispiels näher erläutert. In dieser zeigen Fig. 1 ein Blockdiagramm umfassend einen Arbeitsplatzrechner und eine speicherprogrammierbare Steuerung und Fig. 2a und 2b zusammengeführte graphische Darstellungen im Vergleich, einmal mit und einmal ohne Diskrepanz.

In Fig. 1 ist ein Arbeitsplatzrechner mit 1 bezeichnet, auf dem ein Web-Editor 2 läuft, der auf einen Speicher zugreift, in dem ein Anwenderprogramm 3 gespeichert ist, das von einem Anwender 4 mit Hilfe des Web-Editors 2 erstellt und bearbeitet werden kann. Weiters ist der Arbeitsplatzrechner 1 dazu eingerichtet, aus dem Anwenderprogramm 3 eine graphische Darstellung 5 zu errechnen, die auf einem Bildschirm 6 angezeigt werden kann. Die graphische Darstellung ist insbesondere ein auf Grundlage einer Funktionsbausteinsprache erstellter Funktionsplan.

Weiters ist in Fig. 1 eine speicherprogrammierbare Steuerung 7 dargestellt, die einen Model Manager 8 umfasst, bei dem es sich um eine Software-Komponente handelt, die vom Arbeitsplatzrechner 1 erhaltene Kommandos verarbeiten und entsprechend die Programmkopie 9 modifizieren kann. Die Programmkopie stellt ein Abbild des Anwenderprogramms 3 dar und steuert das Verhalten der speicherprogrammierbaren Steuerung 7. Aus der Programmkopie 9 kann wiederum eine graphische Darstellung 10 erzeugt werden, die im Arbeitsplatzrechner 1 mit Hilfe eines Verschmelzungsalgorithmus 11 mit der graphischen Darstellung 5 zusammengeführt werden kann. Der Verschmelzungsalgorithmus 11 ist in einer Softwarekomponente realisiert, welche die graphischen Darstellungen 5 und 10 integriert und für die Anzeige einer zusammengeführten graphischen Darstellung am Bildschirm 6 aufbereitet.

Durch Tastatur oder Maus editiert der Anwender 4 im Schritt S1 das Anwenderprogramm 3, beispielsweise indem er dem Funktionsplan einen Funktionsblock hinzufügt. Der Web-Editor 2 sendet im Schritt S2 ein Änderungskommando an das lokal gespeicherte Anwenderprogramm 3. Das Anwenderprogramm verändert in Schritt S3 dementsprechend seine grafische Darstellung 5.

Der Web Editor 2 sendet im Schritt S4 über eine Datentelekommunikationsverbindung ein Änderungskommando an den in der speicherprogrammierbaren Steuerung 7 befindlichen Model Manager 8, worauf der Model Manager das Kommando in Schritt S5 an die in der Steuerung 7 lokalisierte Programmkopie 9 weiterleitet. Diese antwortet in Schritt S6 über die Datentelekommunikationsverbindung mit einer Änderung der grafischen Darstellung 10. Der Verschmelzungsalgorithmus 11 integriert die beiden diversitär erzeugten grafischen Darstellungen 5 und 10 und erzeugt in Schritt S7 am Bildschirm 6 ein kombiniertes Bild, in dem allfällige Abweichungen zwischen dem Anwenderprogramm 3 und der Programmkopie 9 erkennbar sind.

In Fig. 2a ist die Verschmelzung der graphischen Darstellungen 5 und 10 im Fall einer vollständigen Übereinstimmung gezeigt. Es sind exemplarisch ein Funktionsblock 12 der graphischen Darstellung 5 und ein Funktionsblock 13 der graphischen Darstellung 10 gezeigt, die mit Hilfe des Verschmelzungsalgorithmus 11 zu einer zusammengeführten Darstellung 14 verschmolzen werden. Da keine Diskrepanzen festgestellt wurden, entspricht die zusammengeführte graphische Darstellung 14 des Funktionsblocks der Darstellung des entsprechenden Funktionsblocks 12 bzw. 13.

In Fig. 2b ist die Verschmelzung der graphischen Darstellungen 5 und 10 im Fall einer Diskrepanz gezeigt. Der Funktionsblock 13 der graphischen Darstellung 5 weicht von dem Funktionsblock 12 der graphischen Darstellung 10 ab, sodass die vom Verschmelzungsalgorithmus 11 erzeugte zusammengeführte Darstellung 14 nicht mehr dem Original (Funktionsbock 12) entspricht. Dem Benutzer stellt sich dies so dar, dass er im Editor 2 den Funktionsblock 12 hinzufügt, in der am Bildschirm 6 angezeigten graphischen Darstellung 14 jedoch eine davon abweichende Darstellung erhält, was auf einen Fehler schließen lässt, der darin liegt, dass zwischen dem Anwenderprogramm 3 und der entsprechenden Programmkopie 9 betreffend den Funktionsblock 12 bzw. 13 eine Diskrepanz herrscht.

## Patentansprüche

1. Verfahren zur Anzeige von Diskrepanzen zwischen einem Anwenderprogramm (3) für eine speicherprogrammierbare Steuerung (7) und dessen Programmkopie (9), wobei das
Anwenderprogramm (3) für die Bearbeitung mittels eines Editors (2) auf einem Arbeitsplatzrechner (1) gespeichert ist und die Programmkopie (9) in einem Speicher der speicherprogrammierbaren Steuerung (7) gespeichert ist, wobei unter Anwendung eines Darstellungsmodells eine graphische Darstellung (5) des Anwenderprogramms (3) erstellt wird, wobei
unter Anwendung des Darstellungsmodells auch eine graphische Darstellung (10) der Programmkopie erstellt wird,
**dadurch gekennzeichnet, dass** die graphische Darstellung (5) des Anwenderprogramms (3) und die graphische Darstellung (10) der Programmkopie (9) einem Verschmelzungsalgorithmus (11) unterworfen werden, der eine zusammengeführte graphische Darstellung (14) erzeugt, welche einer dem Arbeitsplatzrechner (1) zugeordneten Anzeigevorrichtung (6) zu ihrer Anzeige zugeführt wird und welche etwaige Diskrepanzen zwischen der graphischen Darstellung (5) des Anwenderprogramms (3) und der graphischen Darstellung (10) der Programmkopie (9) in der graphischen Darstellung ersichtlich macht.

2. Verfahren nach Anspruch 1, **dadurch gekennzeichnet, dass** die graphische Darstellung (5, 10) des Anwenderprogramms (3) und der Programmkopie (9) als Pixelgrafik erzeugt wird.

3. Verfahren nach Anspruch 1 oder 2, **dadurch gekennzeichnet, dass** die graphische Darstellung (5, 10) des Anwenderprogramms (3) und der Programmkopie (9) als Funktionsplan erzeugt wird.

4. Verfahren nach Anspruch 1, 2 oder 3, **dadurch gekennzeichnet, dass** die zusammengeführte graphische Darstellung (14) in Bereichen ohne Diskrepanzen der graphischen Darstellung (5) des Anwenderprogramms (3) entspricht.

5. Verfahren nach Anspruch 2, 3 oder 4, **dadurch gekennzeichnet, dass** der Verschmelzungsalgorithmus (11) ausgebildet ist, um etwaige Diskrepanzen pixelweise festzustellen und in der zusammengeführten graphischen Darstellung (14) sichtbar zu machen.

6. Verfahren nach einem der Ansprüche 1 bis 5, **dadurch gekennzeichnet, dass** das zur graphischen Darstellung (10) der Programmkopie (9) verwendete Darstellungsmodell in einem Speicher der speicherprogrammierbaren Steuerung (7) gespeichert ist.

7. Verfahren nach Anspruch 6, **dadurch gekennzeichnet, dass** das zur graphischen Darstellung (10) der Programmkopie (9) verwendete Darstellungsmodell zur Erzeugung von 25 Zeichenanweisungen aus der Programmkopie (9) verwendet wird und die Zeichenanweisungen von der speicherprogrammierbaren Steuerung (7) an den Arbeitsplatzrechner (1) übermittelt wird und die Erstellung der graphischen Darstellung (10) der Programmkopie (9) unter Verwendung der Zeichenanweisungen durch den Arbeitsplatzrechner (1) erfolgt.

8. Verfahren nach einem der Ansprüche 1 bis 7, **dadurch gekennzeichnet, dass** die Erzeugung der zusammengeführten graphischen Darstellung (14) mit Hilfe des Verschmelzungsalgorithmus (11) durch den Arbeitsplatzrechner (1) erfolgt.

9. Verfahren nach einem der Ansprüche 1 bis 8, **dadurch gekennzeichnet, dass** das Erstellen der Programmkopie (9) das Kopieren des Anwenderprogramms (3) über eine Datentelekommunikationsverbindung zwischen dem Arbeitsplatzrechner und der speicherprogrammierbaren Steuerung umfasst.

10. Verfahren nach einem der Ansprüche 1 bis 9, **dadurch gekennzeichnet, dass** das Erstellen der Programmkopie das Übermitteln von mit Hilfe des Editors vorgenommenen inkrementellen Änderungen des Anwenderprogramms über eine Datentelekommunikationsverbindung zwischen dem Arbeitsplatzrechner (1) und der speicherprogrammierbaren Steuerung (7) und das entsprechende Aktualisieren der Programmkopie (9) umfasst.

11. Verfahren nach Anspruch 10, **dadurch gekennzeichnet, dass** nach Änderungen des Anwenderprogramms (3), insbesondere nach jeder Änderung des Anwenderprogramms (3), mit Hilfe des Editors (2) die graphische Darstellung (5) des Anwenderprogramms (3) erstellt bzw. aktualisiert wird und dass nach Aktualisierungen der Programmkopie (9), insbesondere nach jeder Aktualisierung der Programmkopie (9), die graphische Darstellung (10) der Programmkopie (9) erstellt bzw. aktualisiert wird.

12. Computerprogrammprodukt umfassend Programmcode-Mittel geeignet zur Durchführung der Schritte eines Verfahrens nach einem der Ansprüche 1 bis 11, wenn das Computerprogrammprodukt auf dem Arbeitsplatzrechner (1) ausgeführt wird.

13. Recheneinrichtung zur Durchführung des Verfahrens nach einem der Ansprüche 1 bis 11, **dadurch gekennzeichnet, dass** der Arbeitsplatzrechner (1) mit einem Computerprogrammprodukt nach Anspruch 12 programmiert ist.

## Claims

1. Method for displaying discrepancies between an application program (3) for a programmable logic controller (7) and its program copy (9), wherein the application program (3) is stored on a personal computer (1) for editing by means of an editor (2) and the program copy (9) is stored in a memory of the programmable logic controller (7), wherein a graphic representation (5) of the application program (3) is created using a display model, wherein a graphic representation (10) of the program copy is also created using the display model, **characterized in that** the graphical representation (5) of the application program (3) and the graphical representation (10) of the program copy (9) are subjected to a merging algorithm (11) which generates a merged graphical representation (14) which is supplied to a display device (6) assigned to the personal computer (1) for displaying it and which makes any discrepancies between the graphical representation (5) of the application program (3) and the graphical representation (10) of the program copy (9) visible in the graphical representation.

2. The method according to claim 1, **characterized in that** the graphic representation (5, 10) of the application program (3) and the program copy (9) is generated as a pixel graphic.

3. The method according to claim 1 or 2, **characterized in that** the graphic representation (5, 10) of the application program (3) and the program copy (9) is generated as a function plan.

4. The method according to claim 1, 2 or 3, **characterized in that** the merged graphic representation (14), in areas without discrepancies, corresponds to the graphic representation (5) of the application program (3).

5. The method according to claim 2, 3 or 4, **characterized in that** the merging algorithm (11) is designed to determine any discrepancies pixel by pixel and to make them visible in the merged graphic representation (14).

6. The method according to any one of claims 1 to 5, **characterized in that** the display model used to graphically display the program copy (9) is stored in a memory of the programmable logic controller (7).

7. The method according to claim 6, **characterized in that** the display model used for the graphic representation (10) of the program copy (9) is used to generate drawing instructions from the program copy (9) and the drawing instructions are transmitted from the programmable logic controller (7) to the personal computer (1) and the graphic representation (10) of the program copy (9) is created using the drawing instructions by the personal computer (1).

8. The method according to any one of claims 1 to 7, **characterized in that** the merged graphic representation (14) is generated by the personal computer (1) with the aid of the merging algorithm (11).

9. The method according to any one of claims 1 to 8, **characterized in that** the creation of the program copy (9) comprises copying the application program (3) via a data telecommunication connection between the personal computer and the programmable logic controller.

10. The method according to any one of claims 1 to 9, **characterized in that** the creation of the program copy comprises the transmission of incremental changes made using the editor of the application program via a data telecommunications connection between the personal computer (1) and the programmable logic controller (7) and the corresponding updating of the program copy (9).

11. The method according to claim 10, **characterized in that** after changes to the application program (3), in particular after each change to the application program (3), the graphical representation (5) of the application program (3) is created or updated with the aid of the editor (2), and that after updates of the program copy (9), in particular after each update of the program copy (9), the graphic representation (10) of the program copy (9) is created or updated.

12. Computer program product comprising program code means suitable for carrying out the steps of a method according to any one of claims 1 to 11, when the computer program product is executed on the personal computer (1).

13. Computing device for performing the method according to any one of claims 1 to 11, **characterized in that** the personal computer (1) is programmed with a computer program product according to claim 12.

## Revendications

1. Procédé permettant d'afficher des divergences entre un programme utilisateur (3), destiné à un dispositif de commande à mémoire programmable (7), et sa copie de programme (9), dans lequel le programme utilisateur (3) est mémorisé sur un ordinateur de poste de travail (1) en vue d'un traitement au moyen d'un éditeur (2) et la copie de programme (9) est mémorisée dans une mémoire du dispositif de commande à mémoire programmable (7), dans lequel une représentation graphique (5) du programme utilisateur (3) est créée en utilisant un modèle de représentation, dans lequel une représentation graphique (10) de la copie de programme est également créée en utilisant le modèle de représentation,
**caractérisé en ce que** la représentation graphique (5) du programme utilisateur (3) et la représentation graphique (10) de la copie de programme (9) sont soumises à un algorithme de fusion (11) qui génère une représentation graphique fusionnée (14) qui est envoyée à un dispositif d'affichage (6) associé à l'ordinateur de poste de travail (1) en vue de son affichage et qui rend visibles sur la représentation graphique les divergences éventuelles entre la représentation graphique (5) du programme utilisateur (3) et la représentation graphique (10) de la copie de programme (9).

2. Procédé selon la revendication 1, **caractérisé en ce que** les représentations graphiques (5, 10) du programme utilisateur (3) et de la copie de programme (9) sont générées sous forme de dessin bitmap.

3. Procédé selon la revendication 1 ou 2, **caractérisé en ce que** les représentations graphiques (5, 10) du programme utilisateur (3) et de la copie de programme (9) sont générées sous forme de graphique de fonction.

4. Procédé selon la revendication 1, 2 ou 3, **caractérisé en ce que**, dans les régions sans divergences, la représentation graphique fusionnée (14) correspond à la représentation graphique (5) du programme utilisateur (3).

5. Procédé selon la revendication 2, 3 ou 4, **caractérisé en ce que** l'algorithme de fusion (11) est conçu pour détecter des divergences éventuelles pixel par pixel et pour les rendre visibles sur la représentation graphique fusionnée (14).

6. Procédé selon l'une quelconque des revendications 1 à 5, **caractérisé en ce que** le modèle de représentation utilisé pour la représentation graphique (10) de la copie de programme (9) est mémorisé dans une mémoire du dispositif de commande à mémoire programmable (7).

7. Procédé selon la revendication 6, **caractérisé en ce que** le modèle de représentation utilisé pour la représentation graphique (10) de la copie de programme (9) est utilisé pour générer des instructions de dessin à partir de la copie de programme (9), et les instructions de dessin sont transmises par le dispositif de commande à mémoire programmable (7) à l'ordinateur de poste de travail (1), et la représentation graphique (10) de la copie de programme (9) est générée par l'ordinateur de poste de travail (1) en utilisant les instructions de dessin.

8. Procédé selon l'une quelconque des revendications 1 à 7, **caractérisé en ce que** la représentation graphique fusionnée (14) est générée par l'ordinateur de poste de travail (1) à l'aide de l'algorithme de fusion (11).

9. Procédé selon l'une quelconque des revendications 1 à 8, **caractérisé en ce que** la création de la copie de programme (9) comprend une reproduction du programme utilisateur (3) par l'intermédiaire d'une liaison de télécommunication de données entre l'ordinateur de poste de travail et le dispositif de commande à mémoire programmable.

10. Procédé selon l'une quelconque des revendications 1 à 9, **caractérisé en ce que** la création de la copie de programme comprend la transmission, par l'intermédiaire d'une liaison de télécommunication de données entre l'ordinateur de poste de travail (1) et le dispositif de commande à mémoire programmable (7), de modifications incrémentales du programme utilisateur effectuées à l'aide de l'éditeur, et la mise à jour correspondante de la copie de programme (9).

11. Procédé selon la revendication 10, **caractérisé en ce que**, après des modifications du programme utilisateur (3), en particulier après chaque modification du programme utilisateur (3), la représentation graphique (5) du programme utilisateur (3) est créée ou mise à jour à l'aide de l'éditeur (2), et **en ce que**, après des mises à jour de la copie de programme (9), en particulier après chaque mise à jour de la copie de programme (9), la représentation graphique (10) de la copie de programme (9) est créée ou mise à jour.

12. Produit-programme informatique comprenant des moyens de code de programme appropriés pour mettre en oeuvre les étapes d'un procédé selon l'une quelconque des revendications 1 à 11 lorsque le produit-programme informatique est exécuté sur l'ordinateur de poste de travail (1).

13. Dispositif de calcul permettant de mettre en oeuvre le procédé selon l'une quelconque des revendications 1 à 11, **caractérisé en ce que** l'ordinateur de poste de travail (1) est programmé avec un produit-programme informatique selon la revendication 12.
